# EUROPÄISCHE PATENTSCHRIFT

(11) **EP 2 349 792 B1**
(45) Veröffentlichungstag und Bekanntmachung des Hinweises auf die Patenterteilung: **03.10.2012**
(21) Anmeldenummer: 09736926.8
(22) Anmeldetag: 15.10.2009
(51) Int. Cl.: B60R 21/207, B60R 21/215

(54) **NAHTAUFREISSMITTEL EINES AIRBAGSYSTEMS SOWIE AIRBAGSYSTEM MIT NAHTAUFREISSMITTEL UND VERFAHREN ZUM EINNÄHEN DES NAHTAUFREISSMITTELS**
SEAM OPENING MEANS OF AN AIRBAG SYSTEM AND AIRBAG SYSTEM COMPRISING A SEAM OPENING MEANS AND METHOD FOR SEWING IN A SEAM OPENING MEANS
MOYEN DE DÉCHIRAGE DE COUTURE D UN SYSTÈME DE COUSSIN DE SÉCURITÉ GONFLABLE, AINSI QUE SYSTÈME DE COUSSIN DE SÉCURITÉ GONFLABLE PRÉSENTANT UN MOYEN DE DÉCHIRAGE DE COUTURE ET PROCÉDÉ DE COUTURE DU MOYEN DE DÉCHIRAGE DE COUTURE

(30) Priorität: 15.10.2008 DE 102008052811
(43) Veröffentlichungstag der Anmeldung: 03.08.2011
(73) Patentinhaber: Strähle + Hess GmbH, 75382 Althengstett (DE)
(72) Erfinder: SENTÜRK, Elvan, 75382 Althengstett (DE); SCHNEIDER, Karl, 75387 Neubulach (DE)
(74) Vertreter: Hoeger, Stellrecht & Partner Patentanwälte
(86) Internationale Anmeldenummer: PCT/EP2009/063473
(87) Internationale Veröffentlichungsnummer: WO 2010/043670

(56) Entgegenhaltungen:
- WO-A-2005/102789
- WO-A-2008/095485
- GB-A- 2 322 603

## Beschreibung

Die Erfindung betrifft ein Nahtaufreißmittel zum Aufreißen einer Schließnaht des Sitzbezugs eines Fahrzeugsitzes beim Auslösen eines in den Fahrzeugsitz integrierten Airbagmoduls gemäß dem Oberbegriff des Anspruchs 1.

Außerdem betrifft die Erfindung ein Airbagsystem mit einem Airbagmodul, das in einen Fahrzeugsitz integrierbar ist, und mit einem Nahtaufreißmittel zum Aufreißen einer Schließnaht des Sitzbezugs des Fahrzeugsitzes beim Auslösen des Airbagmoduls.

Darüber hinaus betrifft die Erfindung ein Verfahren zum Einnähen eines Nahtaufreißmittels eines Airbagsystems in eine Schließnaht eines Sitzbezugs eines Fahrzeugsitzes.

In die Sitze von Land-, Luft- und Wasserfahrzeugen, insbesondere in die Sitze von Kraftfahrzeugen, vor allem in die Fahrer- und Beifahrersitze, werden zunehmend Airbagsysteme integriert. Diese umfassen ein Airbagmodul, das eine Auslöseeinrichtung (üblicherweise einen Gasgenerator) sowie einen Airbag umfasst. Bei einem Aufprall des Fahrzeugs auf ein Hindernis entfaltet sich der Airbag in Bruchteilen einer Sekunde und schützt dadurch den Fahrgast vor Verletzungen. Das Airbagmodul ist in den Fahrzeugsitz integriert. Beim Auslösen des Airbags ist es erforderlich, dass der Sitzbezug an der Stelle aufgerissen wird, an der sich der Airbag entfalten soll. Es sind hierzu Airbagsysteme bekannt, die hinter einer geschwächten Schließnaht des Fahrzeugsitzes angeordnet sind, so dass die Schließnaht beim Entfalten des Airbags reißt und dadurch den Airbag freigibt. Die Bereitstellung einer geschwächten Schließnaht im Bereich des Airbagmoduls ist allerdings kostenaufwändig.

In der WO 2007/042011 A2 wird ein Airbagsystem vorgeschlagen, bei dem zusätzlich zu einem in einen Fahrzeugsitz integrierbaren Airbagmodul ein Nahtaufreißmittel in Form eines Reißbandes zum Einsatz kommt. Das Reißband weist einen ersten Endbereich und einen zweiten Endbereich auf. Der erste Endbereich ist am Airbagmodul festgelegt mittels einer Schraube, und der zweite Endbereich wird in die Schließnaht des Sitzbezugs eingenäht. Wird das Airbagmodul ausgelöst, so übt das Reißband eine Zugkraft auf die Schließnaht des Sitzbezugs aus, die dadurch aufgerissen wird, so dass sich der Airbag entfalten kann. Die Positionierung des Reißbandes am Airbagmodul kann während der Montage des Airbagsystems dokumentiert werden. Hierzu wird in der WO 2007/042011 A2 vorgeschlagen, sowohl am Airbagmodul als auch am Reißband einen Barcode vorzusehen. Der Barcode des Reißbandes kann hierbei den Barcode des Airbagmoduls bereichsweise überdecken. Bei der Montage des Reißbandes am Airbagmodul werden die beiden Barcodes abgelesen, so dass die einwandfreie Positionierung des Reißbandes am Airbagmodul dokumentiert werden kann.

Um im Falle eines Aufpralls des Fahrzeugs sicherzustellen, dass sich der Airbag ungehindert entfalten kann, muss gewährleistet sein, dass das Nahtaufreißmittel mit seinem zweiten Endbereich an einer bestimmten Stelle in eine Schließnaht des Sitzbezugs eingenäht wird. Aus Haftungsgründen muss das lagerichtige Einnähen des Nahtaufreißmittels in die Schließnaht des Sitzbezugs nachweisbar sein.

Die WO 2005/102789 A offenbart Nahtaufreißmittel gemäß dem Oberbegriff des Anspruchs 1.

Die WO 2008/095485 A1 offenbart ein Airbag-System mit einem Airbag-Modul, das eine Öffnungstechnik der Airbag-Aufreißnaht eines Sitzbezuges für den unter dem Bezug nicht sichtbar untergebrachten Airbag enthält, wobei die Öffnungstechnik derart gestaltet ist, dass die Entfaltungskraft des Airbags ein Loch oder Löcher in die Aufreißnaht reißt, die entsprechend der Physik der "Laufmasche" ein leichtes Öffnen der Naht bewirkt/bewirken. Hierzu ist ein in die Airbag-Aufreißnaht des Sitzbezuges beigenähtes Band oder mehrere Bänder oder Bandenden vorgesehen, die an mehr als einer Stelle und angetrieben durch die Entfaltungskraft des Airbags aus der Naht herausgerissen wird bzw. werden. Auf dem Reißband sind optische Markierungen in Form von dunklen Fixierpunkten vorgesehen, die durch eine rechnergesteuerte Nähmaschine erfasst werden können.

Aufgabe der vorliegenden Erfindung ist es, ein Nahtaufreißmittel der eingangs genannten Art derart weiterzubilden, dass das Einnähen des Nahtaufreißmittels an einer vorgegebenen Stelle in die Schließnaht des Sitzbezugs des Fahrzeugsitzes auf einfache und prozesssichere Weise dokumentiert werden kann.

Außerdem soll ein Airbagsystem mit einem in einen Fahrzeugsitz integrierbaren Airbagmodul und mindestens einem derartigen Nahtaufreißmittel bereitgestellt werden.

Darüber hinaus soll ein Verfahren der eingangs genannten Art bereitgestellt werden zum Einnähen eines Nahtaufreißmittels eines Airbagsystems in eine Schließnaht eines Sitzbezugs eines Fahrzeugsitzes, wobei das lagerichtige Einnähen des Nahtaufreißmittels auf einfache und prozesssichere Weise dokumentiert werden kann.

Bei einem Nahtaufreißmittel der gattungsgemäßen Art wird die voranstehend genannte Aufgabe erfindungsgemäß durch die Merkmale des Anspruchs 1 bzw. 12 gelöst, wobei das Markierungselement seitlich über einen Rand des Nahtaufreißmittels hervorsteht. Durch die Bereitstellung des Markierungselementes kann das lagerichtige Einnähen des Nahtaufreißmittels in die Schließnaht auf einfache und prozesssichere Weise dokumentiert werden, denn das Markierungselement kann beim Einnähen von einer Sensoreinrichtung erfasst werden, da es im zweiten Endbereich des Nahtaufreißmittels angeordnet ist, der in die Schließnaht des Sitzbezugs eingenäht wird.

Bei der Herstellung des Nahtaufreißmittels kann ein Endlosmaterial zum Einsatz kommen, das in einem Fertigungsschritt abgelängt wird. Vor oder nach dem Ablängen kann das Markierungselement am Nahtaufreißmittel festgelegt werden. Beispielsweise kann das Markierungselement mit dem Nahtaufreißmittel verklebt oder vernäht werden. Nach dem Ablängen kann dann ein erster Endbereich des Nahtaufreißmittels am Airbagmodul des Airbagsystems positioniert werden und das Markierungselement kann zusammen mit dem zweiten Endbereich des Nahtaufreißmittels bei der Herstellung der Schließnaht des Sitzbezugs in die Schließnaht eingenäht werden. Während des Einnähens kann die Existenz und die Lage des Markierungselements erfasst und dokumentiert werden. Nach dem erfolgreichen Einnähen kann dann der Sitzbezug mit einer Kennzeichnung versehen werden, die das lagerichtige Einnähen des Nahtaufreißmittels in die Schließnaht des Sitzbezugs anzeigt. Hierzu kann die Kennzeichnung beispielsweise mit einem Barcode versehen werden.

Das Markierungselement ist bei einer vorteilhaften Ausführungsform der Erfindung mechanisch und/oder berührungslos erfassbar. Es kann beispielsweise vorgesehen sein, dass das Markierungselement von einer Sensoreinrichtung, die einen mechanischen Fühler aufweist, abgetastet werden kann. Ergänzend oder alternativ kann eine berührungslose Erfassung des Markierungselements vorgesehen sein. Insbesondere kann vorgesehen sein, dass das Markierungselement optisch erfassbar ist. Zur optischen Erfassung kann beispielsweise eine Lichtschranke zum Einsatz kommen, die neben einer Nähnadel einer Nähmaschine angeordnet ist. Mittels der Nähnadel kann der Sitzbezug vernäht werden. Kommt der in die Schließnaht des Sitzbezugs einzunähende zweite Endbereich des Nahtaufreißmittels mit dem Markierungselement in den Bereich der Lichtschranke, so kann das Markierungselement von der Lichtschranke berührungslos erfasst werden. Ein entsprechendes Sensorsignal kann dann einer Auswerteeinrichtung zugeführt werden.

Es kann auch vorgesehen sein, dass das Markierungselement induktiv oder magnetisch erfassbar ist, beispielsweise mittels eines magnetfeldempfindlichen Sensors, insbesondere eines Hall-Sensors oder einer Spule.

Bei dem erfindungsgemäßen Nahtaufreißmittels steht das Markierungselement seitlich über einen Rand des Nahtaufreißmittels hervor. Es bildet somit eine Art Fahne, die seitlich vom Nahtaufreißmittel absteht und daher von einer Sensoreinrichtung zuverlässig erfasst werden kann.

Das Markierungselement ist bevorzugt als Flächengebilde ausgestaltet, insbesondere als Gewebe, vorzugsweise als kaschiertes Gewebe, oder auch als Folie. Vor allem eine Folie aus einem Polyethylen- oder Polyurethanmaterial hat sich als besonders vorteilhaft erwiesen.

Die Handhabung des Nahtaufreißmittels beim Einnähen in die Schließnaht des Sitzbezugs des Fahrzeugsitzes wird vereinfacht, wenn das Markierungselement verformbar ausgestaltet ist. Es kann jedoch auch vorgesehen sein, dass das Markierungselement in Form eines starren Anhängers oder Kennzeichens, insbesondere in Form eines starren Kunststoffanhängers, ausgebildet ist. Insbesondere zur optischen Erfassung des Markierungselementes ist es günstig, wenn das Markierungselement sich optisch vom Rest des Nahtaufreißmittels unterscheidet. Beispielsweise kann das Markierungselement eine sich vom Rest des Nahtaufreißmittels abhebende Farbe aufweisen, es kann beispielsweise eine Leuchtfarbe tragen.

Das Nahtaufreißmittel ist günstigerweise bandförmig ausgestaltet. Die Erfindung ist allerdings nicht auf ein bandförmiges Nahtaufreißmittel beschränkt, alternativ könnte das Nahtaufreißmittel beispielsweise auch in Form einer Schnur oder eines Fadens ausgebildet sein.

Bei einer besonders bevorzugten Ausführungsform der Erfindung weist das Nahtaufreißmittel an seinem ersten Endbereich eine Öffnung auf, insbesondere einen Ring, beispielsweise einen Metallring. Durch die Öffnung kann der zweite Endbereich des Nahtaufreißmittels hindurchgeführt werden zur Ausbildung einer Schlaufe, die das Airbagmodul in Umfangsrichtung vollständig umgibt. Wird das Airbagmodul ausgelöst, so dehnt es sich aus und übt dadurch auf das Nahtaufreißmittel eine Zugkraft aus, die auf den in die Schließnaht des Sitzbezugs eingenähten zweiten Endbereich übertragen wird, so dass die Schließnaht reißt und der Airbag sich entfalten kann.

Wie bereits erwähnt, betrifft die Erfindung auch ein Airbagsystem mit einem Airbagmodul, das in einen Fahrzeugsitz, insbesondere in den Sitz eines Kraftfahrzeuges, integrierbar ist, sowie mit einem Nahtaufreißmittel der voranstehend genannten Art. Das Airbagsystem hat den Vorteil, dass das Einnähen des Nahtaufreißmittels in die Schließnaht des Sitzbezugs auf einfache Weise prozesssicher dokumentiert werden kann und dass die Schließnaht an der gewünschten Stelle bei Auslösen des Airbagmoduls zuverlässig aufgerissen wird, ohne dass hierzu eine geschwächte Schließnaht zum Einsatz kommen muss.

Am Airbagmodul sind bei einer vorteilhaften Ausführungsform im Abstand zueinander zwei Nahtaufreißmittel angeordnet, deren zweite Endbereiche jeweils in die Schließnaht des Sitzbezugs eingenäht sind. Hierbei ist es günstig, wenn die zweiten Endbereiche einander zugewandt sind. Über die einander zugewandten Endbereiche der Nahtaufreißmittel kann die Schließnaht im Bereich zwischen den beiden Nahtaufreißmittel zuverlässig aufgerissen werden. Die beiden Endbereiche weisen jeweils ein Markierungselement auf, so dass beim Einnähen der beiden Nahtaufreißmittel in die Schließnaht des Sitzbezugs auch deren Abstand zueinander auf einfache Weise mittels der Markierungselemente erfassbar ist.

Wie bereits erläutert ist es von Vorteil, wenn das Nahtaufreißmittel eine Schlaufe bildet, die das Airbagmodul in Umfangsrichtung umgibt.

Bei einem Verfahren der eingangs genannten Art wird die bereits erläuterte Aufgabe der Erfindung dadurch gelöst, dass das Markierungselement seitlich über einen Rand des Nahtaufreißmittels hervorsteht

So kann beispielsweise vorgesehen sein, dass man das Nahtaufreißmittel mittels einer Dokumentations-Nähmaschine vernäht, wobei man die Anzahl der Nahtstiche ermittelt vom Beginn der Naht bis zum Erfassen des Markierungselements. Dokumentations-Nähmaschinen sind dem Fachmann an sich bekannt. Mit ihrer Hilfe kann die Anzahl der Nahtstiche beim Herstellen einer Naht erfasst werden. Wird in die Schließnaht eines Fahrzeugsitzes ein erfindungsgemäßes Nahtaufreißmittel mit eingenäht, so kann bei der Herstellung der Schließnaht zusätzlich zur Anzahl der Nahtstiche auch die Existenz und die Lage des Markierungselementes erfasst werden. Die Lage des Markierungselements kann erfasst werden durch Bestimmung der Nahtstiche vom Beginn der Naht bis zum Erfassen des Markierungselements. Auf diese Weise kann das lagerichtige Einnähen des Nahtaufreißmittels in die Schließnaht des Fahrzeugsitzes prozesssicher dokumentiert werden.

Besonders günstig ist es, wenn man die ersten Endbereiche von zwei Nahtaufreißmittel im Abstand zueinander am Airbagmodul festlegt und die zweiten Endbereiche der Nahtaufreißmittel jeweils mit einem Markierungselement versieht, wobei man beim Einnähen der beiden Nahtaufreißmittel in die Schließnaht des Sitzbezugs die Lage der Markierungselemente und auch deren Abstand zueinander erfasst. Wie bereits erläutert, können die Markierungselemente beispielsweise optisch mittels einer Lichtschranke erfasst werden, die seitlich neben der Nähnadel der Dokumentations-Nähmaschine angeordnet ist.

Die nachfolgende Beschreibung einer bevorzugten Ausführungsform der Erfindung dient im Zusammenhang mit der Zeichnung der näheren Erläuterung. Es zeigen:
- Figur 1:: eine schematische Seitenansicht eines Fahrzeugsitzes mit integriertem Airbagsystem einschließlich zweier Nahtaufreißmittel, die in die Schließnaht des Sitzbezugs eingenäht sind;
- Figur 2:: eine vergrößerte Darstellung des Fahrzeugsitzes aus Figur 1 im Bereich der in die die Schließnaht eingenähten Nahtaufreißmittel und
- Figur 3:: eine schematische Darstellung eines Nahtaufreißmittels des Airbagsystems aus Figur 1.

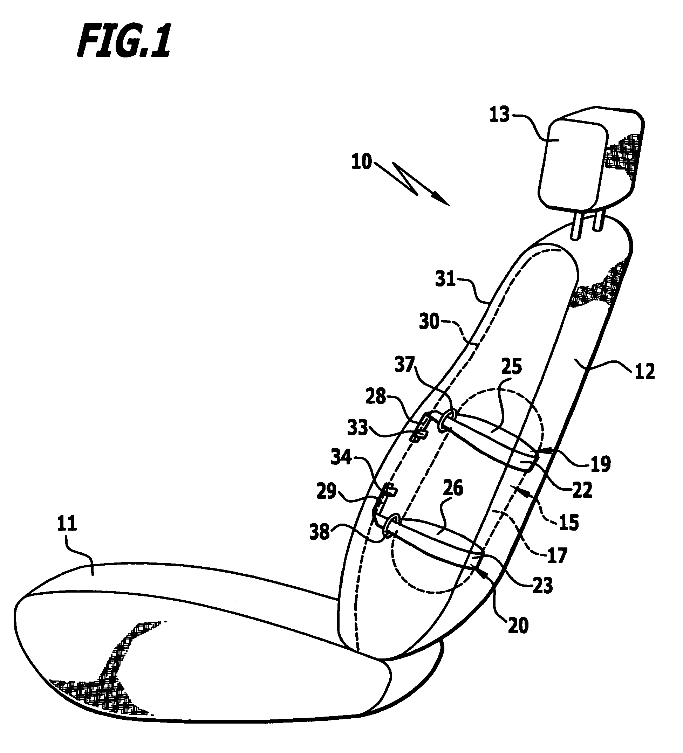

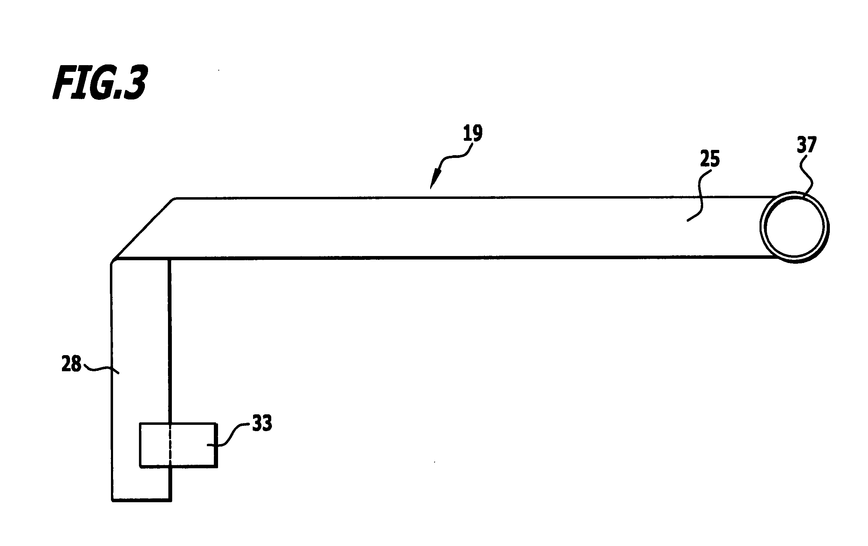

In Figur 1 ist schematisch ein Fahrzeugsitz 10 dargestellt, beispielsweise der Fahrer- oder Beifahrersitz eines Kraftfahrzeuges. Der Fahrzeugsitz 10 weist ein Sitzelement 11 auf sowie eine Rückenlehne 12 und eine Kopfstütze 13. In die Rückenlehne 12 ist ein Airbagsystem 15 integriert mit einem Airbagmodul 17, das in üblicher und deshalb in der Zeichnung nicht dargestellter Weise einen Airbag und eine Auslöseeinrichtung in Form eines Gasgenerators umfasst. Das Airbagsystem 15 weist außerdem zwei Nahtaufreißmittel auf in Form eines ersten Reißbandes 19 und eines zweiten Reißbandes 20. Die beiden Reißbänder 19 und 20 sind identisch ausgebildet. Das Reißband 19 ist in Figur 3 vergrößert dargestellt. Die beiden Reißbänder 19 und 20 umgeben im Abstand zueinander das Airbagmodul 17 in Umfangsrichtung, wobei sie jeweils eine Schlaufe 22 bzw. 23 ausbilden, die an der Außenseite des Airbagmoduls 17 anliegt. Die Schlaufen 22 und 23 definieren jeweils einen ersten Endbereich 25 bzw. 26 der beiden Reißbänder 19 und 20, und ein senkrecht zum ersten Endbereich 25, 26 abgewinkelter zweiter Endbereich 28 bzw. 29 der Reißbänder 19 und 20 ist in eine Schließnaht 30 eines Sitzbezugs 31 des Fahrzeugsitzes 10 eingenäht.

Wird das Airbagmodul 17 ausgelöst, so dehnt es sich in Sekundenbruchteilen aus und übt dadurch auf die beiden Reißbänder 19 und 20 jeweils eine Zugkraft aus. Dies hat zur Folge, dass die Schließnaht 30 in den zweiten Endbereichen 28, 29 sowie in dem dazwischen liegenden Bereich aufgerissen wird und sich dadurch der Airbag entfalten kann.

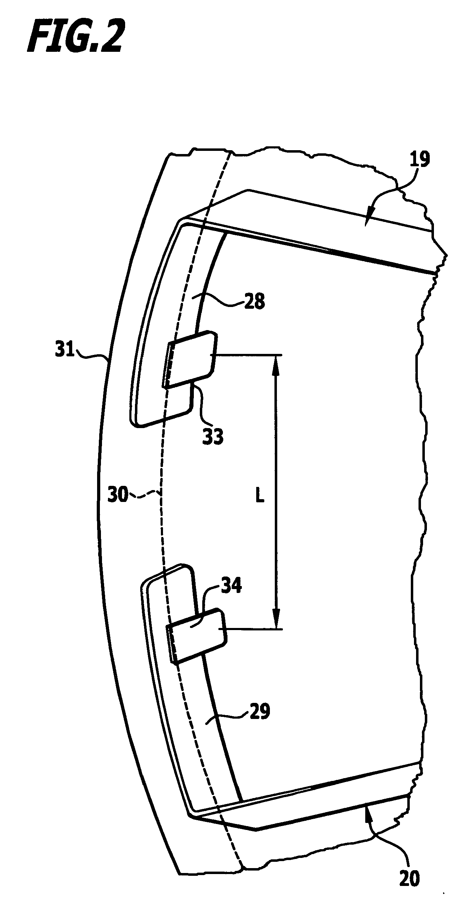

Wie insbesondere aus Figur 2 deutlich wird, weisen die beiden Reißbänder 19 und 20 in den zweiten Endbereichen 28 und 29 jeweils ein seitlich über einen Rand des Reißbandes 19 bzw. 20 hervorstehendes Markierungselement 33 bzw. 34 auf. Die Markierungselemente sind in der dargestellten Ausführungsform viereckig ausgebildet, vorzugsweise quadratisch mit einer Seitenlänge von etwa 10 mm. Sie sind aus einem Gewebe, vorzugsweise einem kaschierten Gewebe, oder einer Folie hergestellt und unterscheiden sich optisch vom Rest der Reißbänder 19 und 20. Im in die Schließnaht 30 eingenähten Zustand, wie er in Figur 2 dargestellt ist, weisen die beiden Markierungselemente 33, 34 einen Abstand L zueinander auf.

In ihren ersten Endbereichen 25 bzw. 26 tragen die beiden Reißbänder 19 und 20 jeweils eine Öffnung in Form eines Metallringes 37, 38. Die Metallringe erleichtern die Herstellung einer Schlaufe. Hierzu ist es lediglich erforderlich, die Reißbänder 19 bzw. 20 jeweils durch den Metallring 37 bzw. 38 hindurchzuführen, so dass die Reißbänder dann das Airbagmodul 17 umgeben können.

Die Reißbänder 19 und 20 sind jeweils aus einem Gewebe, einem Gewirk oder einem Geflecht gefertigt, wobei sie eine Breite von beispielsweise 8 mm bis ca. 20 mm aufweisen können, insbesondere eine Breite von 12 mm. Die Kett- und Schussfadendichte beträgt zwischen etwa 5 Fäden pro cm und ca. 25 Fäden pro cm in einer Garnstärke von 70 dtex bis etwa 1000 dtex. Das Gewicht liegt zwischen zwei Gramm pro Meter und 100 Gramm pro Meter. Es kommen bevorzugt Fäden zum Einsatz, die aus einem thermoplastischen oder duroplastischen Material gefertigt sind.

Die Reißbänder 19 und 20 können aus einem Endlosmaterial gefertigt werden, das in einer gewünschten Länge abgelängt wird. Die Länge ist derart gewählt, dass die in die Schließnaht 30 eingenähten zweiten Endbereiche 28 bzw. 29 eine Länge von mindestens 50 mm aufweisen, vorzugsweise eine Länge von etwa 70 bis 100 mm. In den zweiten Endbereichen 28 und 29 wird jeweils ein Markierungselement 33 bzw. 34 festgelegt, das beispielsweise mit dem Rest des Reißbandes verklebt oder vernäht werden kann.

Nach erfolgter Positionierung der Schlaufen 22 bzw. 23 der Reißbänder 19 und 20 am Airbagmodul 17 kann der Sitzbezug 31 geschlossen werden mittels der Schließnaht 30, wobei in die Schließnaht 30 die zweiten Endbereiche 28 und 29 der Reißbänder 19 und 20 eingenäht werden mittels einer Dokumentations-Nähmaschine. Diese zählt bei der Herstellung der Schließnaht 30 die Nahtstiche bis zum Erreichen der optisch mittels einer neben der Nähnadel der Nähmaschine angeordneten Lichtschranke erfassten Markierungselemente 33 und 34. Dadurch kann deren lagerichtige Orientierung und auch deren gegenseitiger Abstand auf einfache Weise erfasst und dokumentiert werden.

Alternativ oder auch ergänzend zur optischen Erfassung der Markierungselemente 33, 34 können diese auch mittels eines mechanischen Fühlers erfasst werden, der ebenso wie die Lichtschranke seitlich neben der Nähnadel der Dokumentations-Nähmaschine angeordnet sein kann.

Ergänzend zu den Markierungselementen 33 und 34 können die beiden Reißbänder 19 und 20 insbesondere in ihrem ersten Endbereich 25 bzw. 26 weitere Markierungen, insbesondere Buchstaben- und Zahlenkombinationen, aufweisen. Diese Buchstaben- und Zahlenkombinationen dienen allerdings nicht der Dokumentation des lagerichtigen Einnähens der Reißbänder 19 und 20.

## Patentansprüche

1. Nahtaufreißmittel zum Aufreißen einer Schließnaht des Sitzbezugs eines Fahrzeugsitzes beim Auslösen eines in den Fahrzeugsitz integrierten Airbagmoduls, wobei das Nahtaufreißmittel einen ersten und einen zweiten Endbereich aufweist, wobei der erste Endbereich am Airbagmodul positionierbar und der zweite Endbereich in die Schließnaht des Sitzbezugs einnähbar ist, und wobei das Nahtaufreißmittel (19, 20) in seinem zweiten Endbereich (28, 29) ein Markierungselement (33, 34) aufweist, das beim Einnähen des Nahtaufreißmittels (19, 20) in die Schließnaht (30) von einer Sensoreinrichtung erfassbar ist, **dadurch gekennzeichnet, dass** das Markierungselement (33, 34) seitlich über einen Rand des Nahtaufreißmittels (19, 20) hervorsteht.

2. Nahtaufreißmittel nach Anspruch 1, **dadurch gekennzeichnet, dass** das Markierungselement (33, 34) mechanisch und/oder berührungslos erfassbar ist.

3. Nahtaufreißmittel nach Anspruch 1 oder 2, **dadurch gekennzeichnet, dass** das Markierungselement (33, 34) optisch und/oder induktiv erfassbar ist.

4. Nahtaufreißmittel nach einem der voranstehenden Ansprüche, **dadurch gekennzeichnet, dass** das Markierungselement (33, 34) als Flächengebilde ausgebildet ist, insbesondere als Gewebe oder Folie.

5. Nahtaufreißmittel nach einem der voranstehenden Ansprüche, **dadurch gekennzeichnet, dass** das Markierungselement (33, 34) verformbar ist.

6. Nahtaufreißmittel nach einem der voranstehenden Ansprüche, **dadurch gekennzeichnet, dass** das Markierungselement (33, 34) sich optisch vom Rest des Nahtaufreißmittels (19, 20) unterscheidet.

7. Nahtaufreißmittel nach einem der voranstehenden Ansprüche, **dadurch gekennzeichnet, dass** das Nahtaufreißmittel (19, 20) bandförmig ausgestaltet ist.

8. Nahtaufreißmittel nach einem der voranstehenden Ansprüche, **dadurch gekennzeichnet, dass** das Nahtaufreißmittel (19, 20) an seinem ersten Endbereich (25, 26) eine Öffnung aufweist, insbesondere einen Ring (37, 38).

9. Airbagsystem mit einem Airbagmodul (17), das in einen Fahrzeugsitz (10) integrierbar ist, und mit mindestens einem Nahtaufreißmittel (19, 20) nach einem der voranstehenden Ansprüche.

10. Airbagsystem nach Anspruch 9, **dadurch gekennzeichnet, dass** am Airbagmodul (17) im Abstand zueinander zwei Nahtaufreißmittel (19, 20) angeordnet sind, deren zweite Endbereiche (28, 29) einander zugewandt sind.

11. Airbagsystem nach Anspruch 9 oder 10, **dadurch gekennzeichnet, dass** das mindestens eine Nahtaufreißmittel (19, 20) eine Schlaufe (22, 23) bildet, die das Airbagmodul (17) umgibt.

12. Verfahren zum Einnähen eines Nahtaufreißmittels eines Airbagsystems in eine Schließnaht eines Sitzbezugs eines Fahrzeugsitzes, wobei ein erster Endbereich des Nahtaufreißmittels an einem Airbagmodul des Airbagsystems positioniert ist und ein zweiter Endbereich des Nahtaufreißmittels in die Schließnaht des Sitzbezugs eingenäht wird, und wobei man das Nahtaufreißmittel in seinem zweiten Endbereich mit einem Markierungselement versieht und beim Einnähen des Nahtaufreißmittels in die Schließnaht die Lage des Markierungselements mittels einer Sensoreinrichtung erfasst, **dadurch gekennzeichnet, dass** das Markierungselement seitlich über einen Rand des Nahtaufreißmittels hervorsteht.

13. Verfahren nach Anspruch 12, **dadurch gekennzeichnet, dass** man das Nahtaufreißmittel mittels einer Dokumentations-Nähmaschine in die Schließnaht einnäht, wobei man die Anzahl der Nahtstiche ermittelt vom Beginn der Naht bis zum Erfassen des Markierungselements.

14. Verfahren nach Anspruch 12 oder 13, **dadurch gekennzeichnet, dass** man die ersten Endbereiche von zwei Nahtaufreißmittel im Abstand zueinander am Airbagmodul positioniert und dass man die zweiten Endbereiche der Nahtaufreißmittel jeweils mit einem Markierungselement versieht, und dass man beim Einnähen der beiden Nahtaufreißmittel in die Schließnaht des Sitzbezugs die Lage der Markierungselemente und deren Abstand zueinander erfasst.

## Claims

1. Seam opening means for ripping open a closing seam of the seat cover of a vehicle seat when an airbag module integrated into the vehicle seat is activated, wherein the seam opening means has a first and a second end area, wherein the first end area is able to be positioned on the airbag module and the second end area is able to be sewn into the closing seam of the seat cover, and wherein in its second end area (28, 29) the seam opening means (19, 20) has a marking element (33, 34) detectable by a sensor device when the seam opening means (19, 20) is sewn into the closing seam (30), **characterized in that** the marking element (33, 34) projects laterally beyond an edge of the seam opening means (19, 20).

2. Seam opening means as defined in claim 1, **characterized in that** the marking element (33, 34) is detectable mechanically and/or in a noncontacting manner.

3. Seam opening means as defined in claim 1 or 2, **characterized in that** the marking element (33, 34) is detectable optically and/or inductively.

4. Seam opening means as defined in any one of the preceding claims, **characterized in that** the marking element (33, 34) is designed as a fabric, in particular as a woven fabric or film.

5. Seam opening means as defined in any one of the preceding claims, **characterized in that** the marking element (33, 34) is deformable.

6. Seam opening means as defined in any one of the preceding claims, **characterized in that** the marking element (33, 34) differs optically from the rest of the seam opening means (19, 20).

7. Seam opening means as defined in any one of the preceding claims, **characterized in that** the seam opening means (19, 20) is of a tape-like configuration.

8. Seam opening means as defined in any one of the preceding claims, **characterized in that** the seam opening means (19, 20) has an opening, in particular a ring (37, 38), at its first end area (25, 26).

9. Airbag system with an airbag module (17) integratable into a vehicle seat (10) and at least one seam opening means (19, 20) as defined in any one of the preceding claims.

10. Airbag system as defined in claim 9, **characterized in that** two seam opening means (19, 20) are arranged on the airbag module (17) at a distance from one another, the second end areas (28, 29) of said seam opening means facing one another.

11. Airbag system as defined in claim 9 or 10, **characterized in that** the at least one seam opening means (19, 20) forms a loop (22, 23) surrounding the airbag module (17).

12. Method for sewing a seam opening means of an airbag system into a closing seam of a seat cover of a vehicle seat, wherein a first end area of the seam opening means is positioned on an airbag module of the airbag system and a second end area of the seam opening means is sewn into the closing seam of the seat cover, and wherein the seam opening means is provided with a marking element in its second end area and the position of the marking element is detected by means of a sensor device when the seam opening means is sewn into the closing seam, **characterized in that** the marking element projects laterally beyond an edge of the seam opening means.

13. Method as defined in claim 12, **characterized in that** the seam opening means is sewn into the closing seam by means of a documentation sewing machine, wherein the number of seam stitches is determined from the beginning of the seam as far as the detection of the marking element.

14. Method as defined in claim 12 or 13, **characterized in that** the first end areas of two seam opening means are positioned on the airbag module at a distance from one another and that the second end areas of the seam opening means are each provided with a marking element and that the position of the marking elements and their distance from one another are detected when the two seam opening means are sewn into the closing seam of the seat cover.

## Revendications

1. Moyen de déchirage de couture pour déchirer une couture de fermeture d'une housse de siège d'un siège de véhicule lors du déclenchement d'un module de coussin d'air intégré dans le siège de véhicule, dans lequel le moyen de déchirage de couture présente une première et une deuxième zones d'extrémité, dans lequel la première zone d'extrémité peut être positionnée sur le module de coussin d'air et la deuxième zone d'extrémité peut être cousue dans la couture de fermeture de la housse de siège, et dans lequel le moyen de déchirage de couture (19, 20) présente dans sa deuxième zone d'extrémité (28, 29) un élément de marquage (33, 34) qui, lors de la couture du moyen de déchirage de couture (19, 20) dans la couture de fermeture (30), peut être détecté par un dispositif de capteur, **caractérisé en ce que** l'élément de marquage (33, 34) est saillant latéralement au-delà d'un bord du moyen de déchirage de couture (19, 20).

2. Moyen de déchirage de couture selon la revendication 1, **caractérisé en ce que** l'élément de marquage (33, 34) peut être détecté mécaniquement et/ou sans contact.

3. Moyen de déchirage de couture selon la revendication 1 ou 2, **caractérisé en ce que** l'élément de marquage (33, 34) peut être détecté optiquement et/ou par induction.

4. Moyen de déchirage de couture selon l'une quelconque des revendications précédentes, **caractérisé en ce que** l'élément de marquage (33, 34) se présente sous la forme d'une structure plate, en particulier d'un tissu ou d'une pellicule.

5. Moyen de déchirage de couture selon l'une quelconque des revendications précédentes, **caractérisé en ce que** l'élément de marquage (33, 34) est déformable.

6. Moyen de déchirage de couture selon l'une quelconque des revendications précédentes, **caractérisé en ce que** l'élément de marquage (33, 34) se distingue optiquement du reste du moyen de déchirage de couture (19, 20).

7. Moyen de déchirage de couture selon l'une quelconque des revendications précédentes, **caractérisé en ce que** le moyen de déchirage de couture (19, 20) est réalisé sous forme de bande.

8. Moyen de déchirage de couture selon l'une quelconque des revendications précédentes, **caractérisé en ce que** le moyen de déchirage de couture (19, 20) présente une ouverture, en particulier un anneau (37, 38), à sa première zone d'extrémité (25, 26).

9. Système de coussin d'air avec un module de coussin d'air (17), qui peut être intégré dans un siège de véhicule (10), et avec au moins un moyen de déchirage de couture (19, 20) selon l'une quelconque des revendications précédentes.

10. Système de coussin d'air selon la revendication 9, **caractérisé en ce que** deux moyens de déchirage de couture (19, 20), dont les deuxièmes zones d'extrémité (28, 29) sont tournées l'une vers l'autre, sont disposés à distance l'un de l'autre sur le module de coussin d'air (17).

11. Système de coussin d'air selon la revendication 9 ou 10, **caractérisé en ce que** ledit au moins un moyen de déchirage de couture (19, 20) forme une boucle (22, 23), qui entoure le module de coussin d'air (17).

12. Procédé de couture d'un moyen de déchirage de couture d'un système de coussin d'air dans une couture de fermeture d'une housse de siège d'un siège de véhicule, dans lequel une première zone d'extrémité du moyen de déchirage de couture est positionnée sur un module de coussin d'air du système de coussin d'air et on coud une deuxième zone d'extrémité du moyen de déchirage de couture dans la couture de fermeture de la housse de siège, et dans lequel on munit le moyen de déchirage de couture d'un élément de marquage dans sa deuxième zone d'extrémité et, lors de la couture du moyen de déchirage de couture dans la couture de fermeture, on détecte la position de l'élément de marquage au moyen d'un dispositif de capteur, **caractérisé en ce que** l'élément de marquage est saillant latéralement au-delà d'un bord du moyen de déchirage de couture.

13. Procédé selon la revendication 12, **caractérisé en ce que** l'on coud le moyen de déchirage de couture dans la couture de fermeture au moyen d'une machine à coudre à documentation, dans lequel on détermine le nombre de points de couture depuis le commencement de la couture jusqu'à la détection de l'élément de marquage.

14. Procédé selon la revendication 12 ou 13, **caractérisé en ce que** l'on positionne les premières zones d'extrémité de deux moyens de déchirage de couture à distance l'une de l'autre sur le module de coussin d'air et **en ce que** l'on munit les deuxièmes zones d'extrémité des moyens de déchirage de couture respectivement d'un élément de marquage, et **en ce que** l'on détecte la position des éléments de marquage et leur distance l'un de l'autre lors de la couture des deux moyens de déchirage de couture dans la couture de fermeture de la housse de siège.
